# EUROPEAN PATENT APPLICATION

(11) **EP 3 925 855 A1**
(43) Date of publication of application: **22.12.2021**
(21) Application number: 20181109.8
(22) Date of filing: 19.06.2020
(51) Int. Cl.: B62B 7/06

(54) **BABY STROLLER FRAME WITH FOLDING DEVICE**

(71) Applicant: Yojin Industrial Corp., Chia i Hsien (TW)
(72) Inventor: WANG, YU-WEN, CHIA I HSIEN xxxxx (TW); HUNG, SHENG-PO, CHIA I HSIEN xxxxx (TW)
(74) Representative: Hellmich, Wolfgang

(57) **Abstract**

A baby stroller frame with a linked folding device comprises a folding joint (2) on the upper end of a rear leg frame (1) and is pivotally connected with a front leg frame (3) and a handlebar frame (4). The handlebar frame comprises a lower handlebar frame (41) that is pivotally connected to the folding joint, and an upper handlebar frame (42). When the upper handlebar frame turns and folds onto the lower handlebar frame, it will firstly drive a releasing push block inside a seatback clutch joint so that the seatback frame will fall down, then a lower sliding block pushes a hook to release a slide base, so that the slide base will slide downward along the rear leg frame , causing two connecting rods (6) to pull the front leg frame and the handlebar frame and fold them onto the rear leg frame. Thus, the baby stroller frame can be folded all at once.

## Description

The present invention relates to a baby stroller frame linked folding device. On the upper edge of the rear leg frame of the baby stroller, a slide base is provided, which can slide and be hooked. On the upper end of the rear leg frame, a linked folding joint is provided, pivotally connected to the front leg frame and the handlebar frame. Two connecting rods are pivotally connected to the slide base for further linkage with the front leg frame and the handlebar frame. On the inner side of the linked folding joint, a seatback clutch joint is configured for installation of the seatback frame. When the upper handlebar frame is folded toward the lower handlebar frame, the seatback clutch joint will be released and the seatback frame will fall down, and then, the slide base will be unhooked and slide downward, and through the connecting rods, it will pull the front leg frame and the handlebar frame to move close to the rear leg frame. Thus, the baby stroller can be folded all at once.

Things to be considered when designing a baby stroller include weight capacity, inner cushion to support and cover the baby, shock absorbing performance, two-way operation, adjustable seat, sun shading, detachable cushion for easy washing etc. These are mainly required for the physical and psychological comfort of the baby. When operating a baby stroller, a parent or a babysitter may also consider whether the baby stroller can be folded easily.

In order to facilitate folding and unfolding operations, and minimize the size of the baby stroller after folding for easy transportation and storage, there are many different kinds of baby strollers in the current market, ranging from double folding to triple folding, and featuring different structures and operations. In the design of a triple folding baby stroller, the tilting angle of the seatback can be adjusted so that the baby can sit, lean back or lie flat. However, when folding the baby stroller, one has to fold the seatback backward and downward before folding the stroller frame. Such an operation is quite inconvenient for users.

In order to solve the problem of inconvenience that the above-mentioned triple-folding baby stroller can not be folded without turning down the seatback first, the present invention provides a method to fold the baby stroller with just one operation: through the linked folding joint connecting the front and rear leg frames and the handlebar frame, when the handlebar frame is folded, the pushing and releasing block configured inside it will continuously push the upper sliding block inside the linked folding joint, causing the lower sliding block to push and release the seatback clutch joint so that the seatback frame will naturally fall down, and then, the lower sliding block will push and release the hook so that it can slide along the slide base configured on the rear leg frame, and subsequently, the two connecting rods pivotally connected on the slide base will pull the front leg frame and the handlebar frame to move close to the rear leg frame. Thus, the baby stroller can be folded all at once.

To solve the above technical problem, the present invention offers the following solution:
A baby stroller frame linked folding device, characteristically comprising: a linked folding joint provided on the upper end of a rear leg frame, pivotally connected to a front leg frame and a handlebar frame. The handlebar frame comprises a lower handlebar frame and an upper handlebar frame. The lower handlebar frame is pivotally connected to the linked folding joint, and at the connecting position, a pushing and releasing block is configured inside. The upper handlebar frame has a folding operator, and is pivotally connected to the lower handlebar frame through a handlebar folding clutch joint. On the handlebar folding clutch joint, a cord is configured, which can pull the pushing and releasing block inside the lower handlebar frame when the upper handlebar frame is folded. A seatback frame is provided, whose tilting angle can be adjusted. Between the seatback frame and the linked folding joint, a seatback clutch joint is configured. In particular:
On the rear leg frame, a slide base is configured, capable of sliding along the rear leg frame. On the slide base, a hook receiver portion is configured. On both sides of the upper end of the slide base, two connecting rods are respectively and pivotally connected, each pivotally connected to the front leg frame and the lower handlebar frame;

Inside the linked folding joint, an upper sliding block is configured, capable of sliding back and forth, with its rear end elastically pushed against said pushing and releasing block. Inside the linked folding joint and below the upper sliding block, a lower sliding block is configured, elastically pushed against the upper sliding block, and capable of sliding up and down. At the pushing positions of the upper sliding block and the lower sliding block, tilted supporting facets are configured to push against each other. On the inner side of the lower sliding block, side tilted supporting facets are further configured. Meanwhile, inside the linked folding joint and below the lower sliding block, a hook is pivotally configured, capable of turning elastically. The upper and lower ends of the hook is respectively configured with a bracing portion to receive the push by the lower end of the lower sliding block and a hook portion to catch the hook receiver portion of the slide base;

The seatback clutch joint comprises a groove portion configured at the corresponding position on the linked folding joint. Inside the groove portion, a releasing push block is configured, capable of sliding left and right, and having a tilted supporting facet to push against the side tilted supporting facet of the lower sliding block. At a corresponding position on the seatback frame, another groove portion is configured correspondingly. Inside the groove portion, a bonding tooth is configured, elastically pushing against the releasing push block, so that the bonding tooth can be caught inside the groove portions of the linked folding joint and the seatback frame at the same time.

When the upper handlebar frame is folded onto the lower handlebar frame, the cord is driven to pull the pushing and releasing block, pushing the upper sliding block inside the linked folding joint to slide forward, and driving the lower sliding block to slide downward. It will firstly push the releasing push block inside the seatback clutch joint, so that the bonding tooth is released from the groove portion of the linked folding joint, allowing the seatback frame to fall down naturally. Then, the lower end of the lower sliding block will push the bracing portion of the hook, so that the hook portion will be released from the hook receiver portion of the slide base, allowing the slide base to slide downward. Finally, through the two connecting rods, the front leg frame and the folded handlebar frame can be folded onto the rear leg frame.

The present invention has the following beneficial efficacy: when the upper handlebar frame is folded toward the lower handlebar frame, it will drive the upper sliding block inside the linked folding joint and further drive the lower sliding block. Sequentially, the seatback clutch joint will be released, the seatback frame will fall down, and then, the originally hooked and fixed slide base on the rear leg frame will be released, and the folded handlebar frame and the front leg frame will be folded together onto the rear leg frame. Thus, the baby stroller can be folded all at once, without the extra need to put down the seatback frame first.
Fig. 1 is a perspective view of the frame of the baby stroller of the present invention.
Fig. 2 is exploded perspective 1 at the linked folding joint of the present invention.
Fig. 3 is exploded perspective 2 at the linked folding joint of the present invention.
Fig. 4 is a side view of the baby stroller of the present invention.
Fig. 5 is a transverse sectional view at the linked folding joint of the present invention.
Fig. 6 is a longitudinal sectional view at the linked folding joint of the present invention.
Fig. 7 is a side view of the baby stroller of the present invention when the upper handlebar frame is folded.

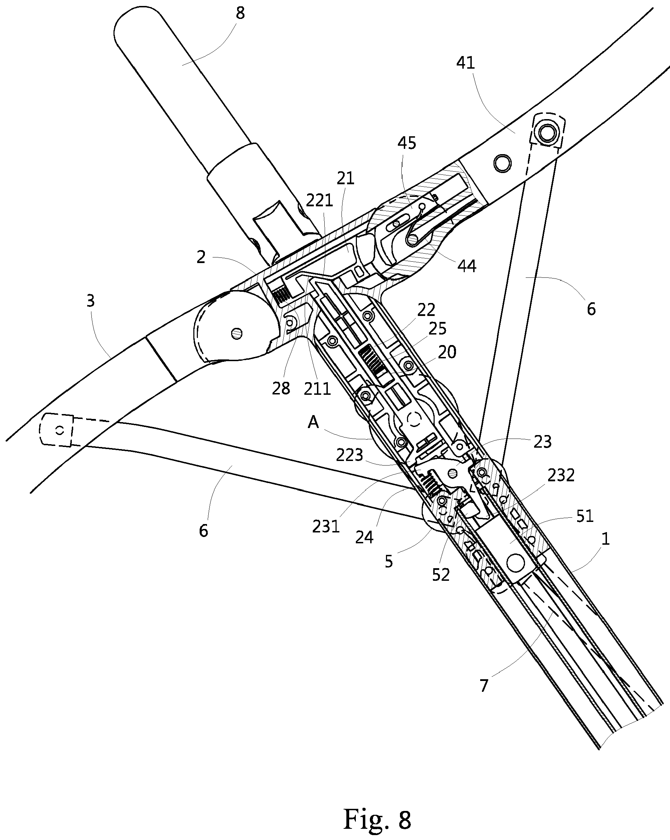

Fig. 8 is a longitudinal sectional view at the linked folding joint of the present invention when the upper handlebar frame is folded.

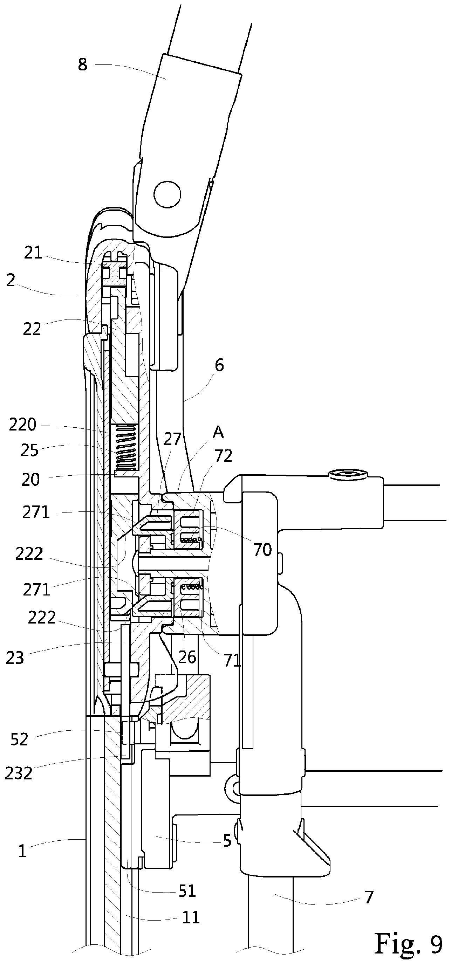

Fig. 9 is a transverse sectional view at the linked folding joint of the present invention when the upper handlebar frame is folded.
Fig. 10 is a side view of the baby stroller of the present invention when the upper handlebar frame is folded onto the lower handlebar frame.

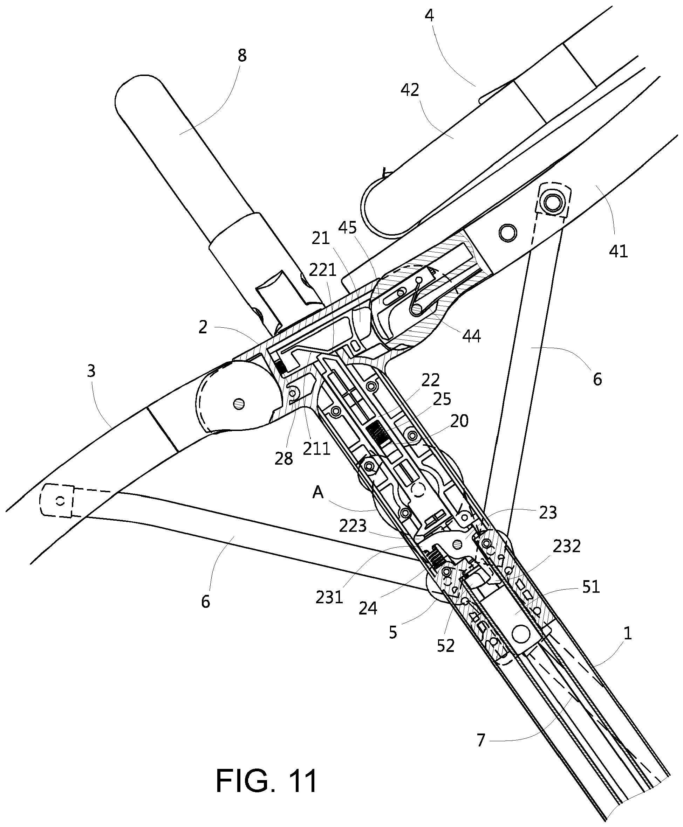

Fig. 11 is a longitudinal sectional view at the linked folding joint of the present invention when the upper handlebar frame is folded onto the lower handlebar frame.
Fig. 12 is a side view of the baby stroller of the present invention when the front leg frame and the folded handlebar frame moves close to the rear leg frame.
Fig. 13 is a longitudinal sectional view of the linked folding joint of the present invention when the front leg frame and the folded handlebar frame moves close to the rear leg frame.
Fig. 14 is a side view of the baby stroller of the present invention when the frame is completely folded.

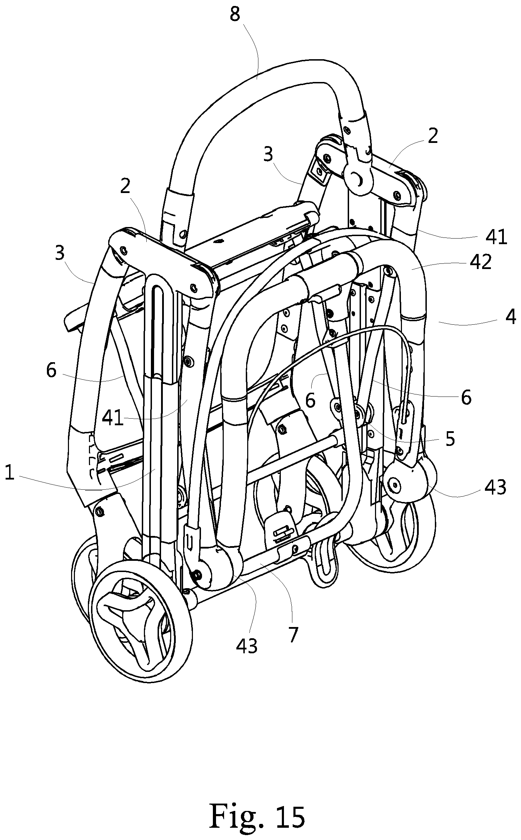

Fig. 15 is a perspective view of the baby stroller of the present invention when the frame is completely folded.

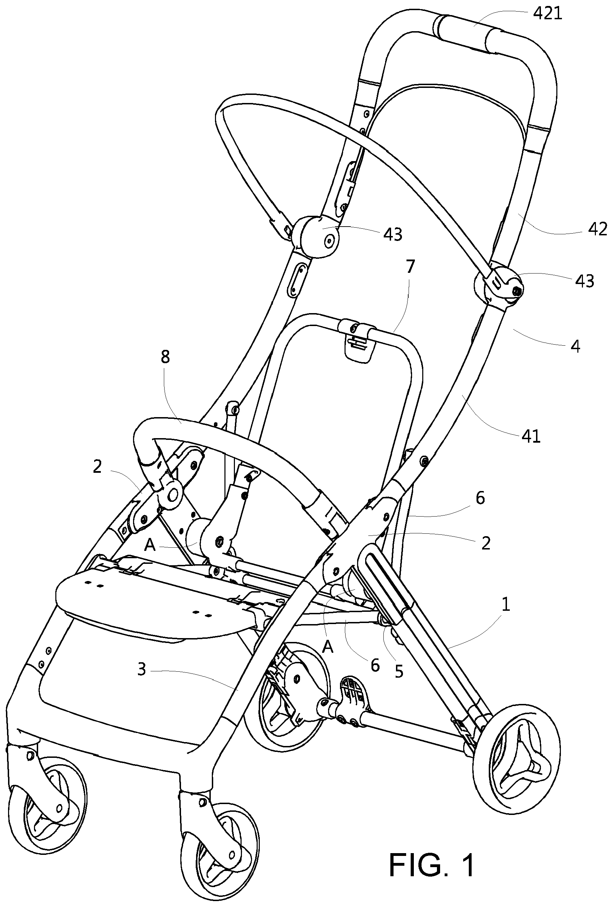

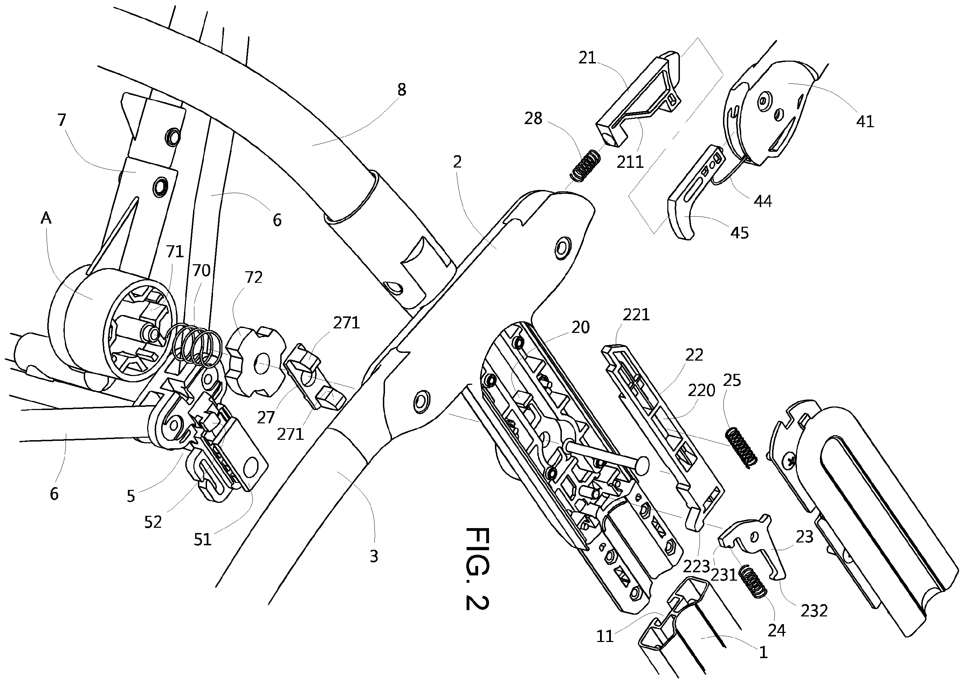

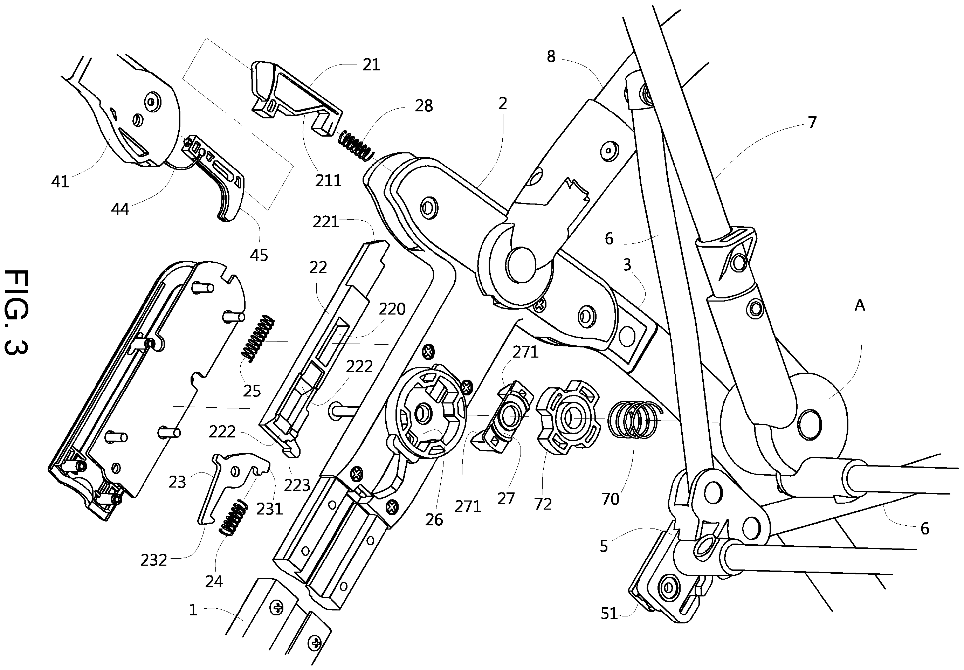

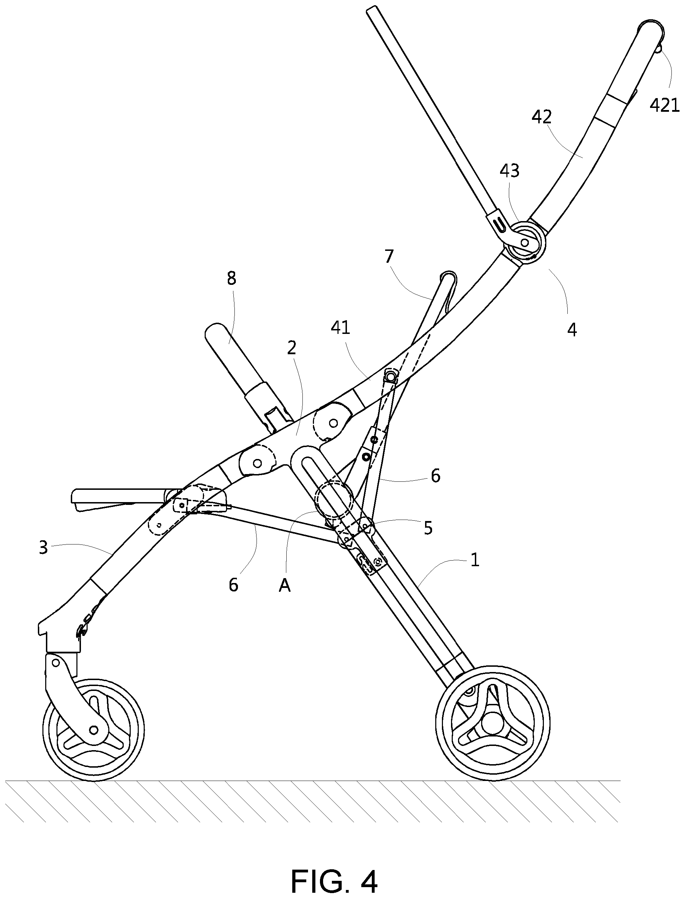

Disclosed in Fig.1-Fig.4, the baby stroller of the present invention comprises a rear leg frame 1. The upper end of the rear leg frame 1 is configured with a linked folding joint 2. The linked folding joint 2 is further configured with a front guardrail 8. The front end of the linked folding joint 2 is pivotally connected with a downward extending front leg frame 3, and the rear end is pivotally connected with a handlebar frame 4 that extends upslope. The handlebar frame 4 comprises a lower handlebar frame 41 pivotally connected to the linked folding joint 2, and the lower handlebar frame 41 is connected with an upper handlebar frame 42 through a handlebar folding clutch joint 43. The upper handlebar frame 42 is configured with a folding operator 421. When the folding operator 421 is triggered or pushed, the handlebar folding clutch joint 43 will be released, so that the upper handlebar frame 42 can fall and turn downward toward the lower handlebar frame 41. Along with the turning of the upper handlebar frame 42, the handlebar folding clutch joint 43 will turn and pull the cord 44 configured inside the lower handlebar frame 41. Moreover, on the inner side of the linked folding joint 2, a seatback clutch joint A is provided, with pivotal installation of a seatback frame 7, whose tilting angle can be adjusted.

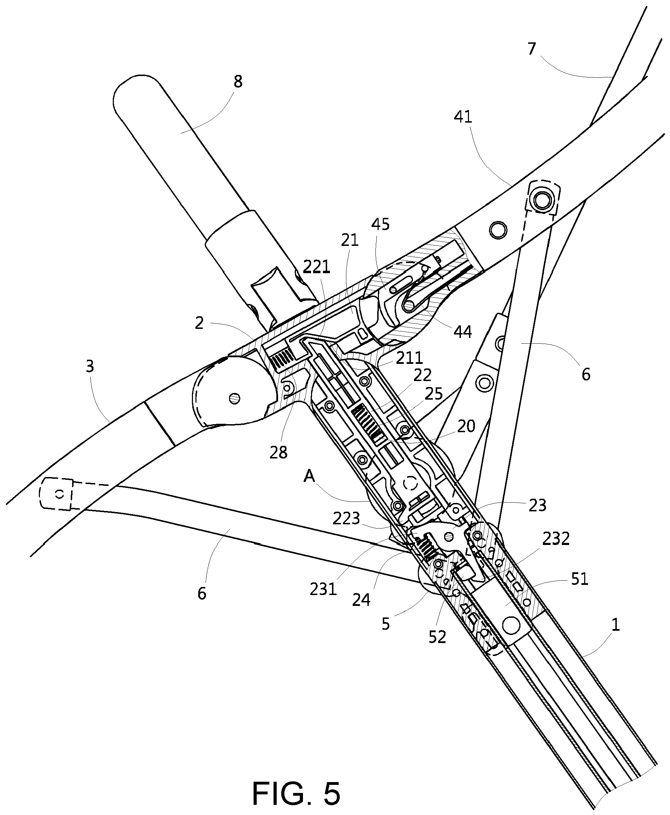

Further, disclosed in Fig.5, a slide base 5 is provided, which can slide along the upper portion of the rear leg frame 1. Both sides of the slide base 5 are configured with inlayed sliding portions 51 that can slide inside and along the sliding grooves 11 of the rear leg frame 1. On both sides of the upper end of slide base 5, a connecting rod 6 is respectively and pivotally connected. And the two connecting rods 6 are respectively and pivotally connected to the front leg frame 3 and the lower handlebar frame 41. Thus, along with the sliding of the slide base 5, the two connecting rods 6 will drive the front leg frame 3 and the handlebar frame 4 to fold or unfold. Meanwhile, on the lower end of the slide base 5, a hook receiver portion 52 is provided.

Further, inside said lower handlebar frame 41 that is pivotally connected to the linked folding joint 2, a pushing and releasing block 45 is configured, capable of sliding back and forth. Said cord 44 goes around the pivotal connecting position and backward, and is connected on the pushing and releasing block 45. Thus, when the cord 44 is pulled or released, the pushing and releasing block 45 can move forward or backward.

Further, inside the upper portion of said linked folding joint 2, an upper sliding block 21 is configured, also capable of sliding back and forth. At a lower middle position of the upper sliding block 21, a tilted supporting facet 211 is configured. Inside the linked folding joint 2 and below the upper sliding block 21, a lower sliding block 22 is configured, capable of sliding up and down. At a middle position of the lower sliding block 22, a lower slot 220 is configured. Inside the lower slot 220, a spring 25 is provided to elastically push the lower sliding block 22 upward so that it can sit on the supporting plate 20 inside the linked folding joint 2. At the same time, on the upper end of the lower sliding block 22, a tilted supporting facet 221 is configured to push against the tilted supporting facet 211 of the upper sliding block 21. On the inner side of the lower sliding block 22, two tilted supporting facets 222 are configured, one at a lower position and the other on the lower end. On the left and lower end of the lower sliding block 22, a lower pusher portion 223 is configured. Then, inside the linked folding joint 2 and below the lower sliding block 22, an L-shaped hook 23 is pivotally configured, capable of turning. On the upper end of the hook 23, a bracing portion 231 is configured, to be pushed by the lower pusher portion 223 of the lower sliding block 22. On the lower end of the hook 23, a hook portion 232 is configured. Inside the linked folding joint 2 and below the bracing portion 231, a spring 24 is configured. The upper end of the spring 24 elastically pushes against the bottom of the bracing portion 231, so that the hook portion 232 on the lower end of the hook 23 can be turned and be caught on the hook receiver portion 52 at the lower end of said slide base 5.

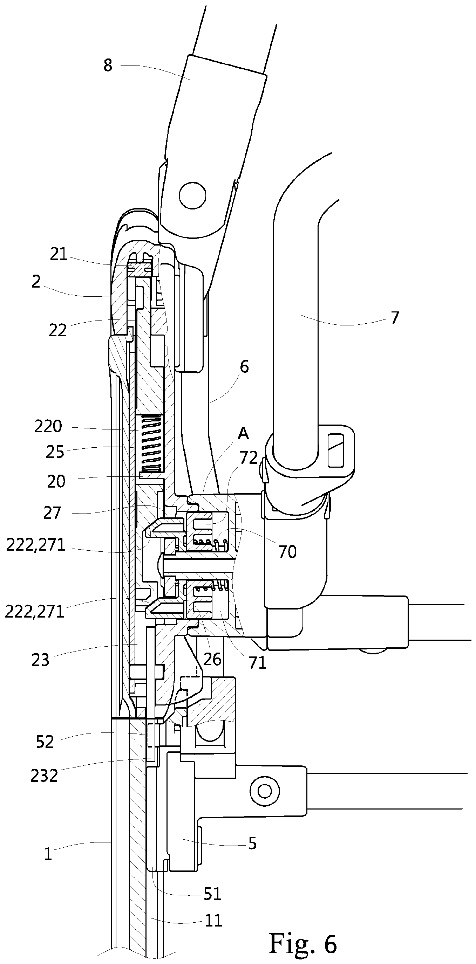

Further, disclosed in Fig.6, said seatback clutch joint A configured on the inner side of the linked folding joint 2 comprises a groove portion 26 on the linked folding joint 2. Inside the groove portion 26, a releasing push block 27 is configured, capable of sliding. Meanwhile, at the upper and lower positions on the side of the releasing push block 27, tilted supporting facets 271 are configured, tilting in the same direction. And at the corresponding position on the seatback frame 7, another groove portion 71 is configured. Inside and at the end of the groove portion 71, a spring 70 is configured. Inside the groove portion 71 and in the axial direction, a bonding tooth 72 is configured, capable of sliding. The spring 70 will elastically push the bonding tooth 72, so that the bonding tooth 72 will be caught inside the groove portion 26 and the groove portion 71 at the same time, and will also elastically push the releasing push block 27, so that the two tilted supporting facets 271 of the releasing push block 27 will be pushed right against the side tilted supporting facet 222 of the lower sliding block 22.

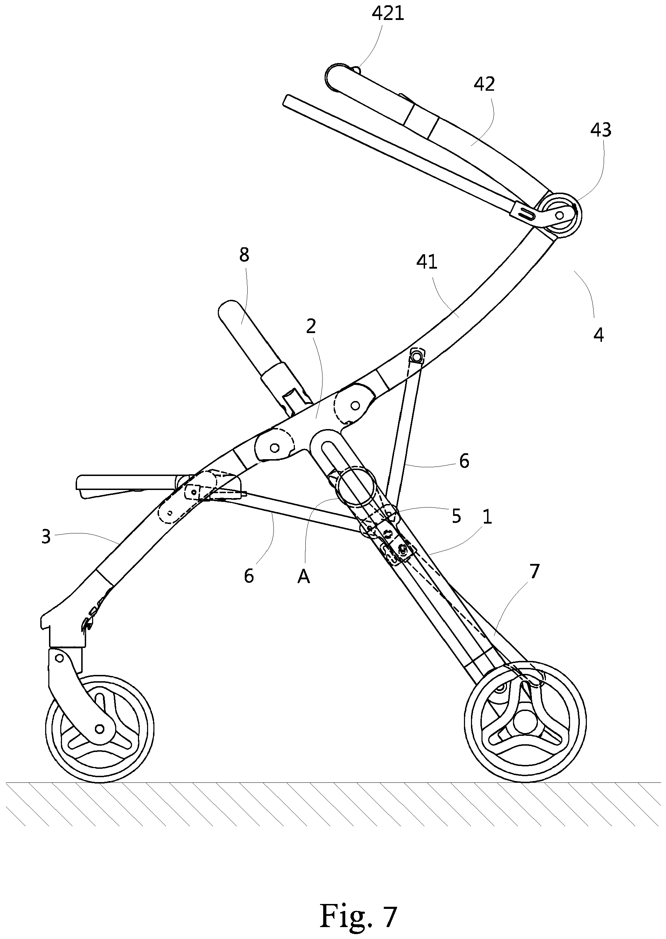

Thus, as depicted Figs.7∼9, when the folding operator 421 of the handlebar frame 4 is triggered or pushed, the handlebar folding clutch joint 43 will be released, and the upper handlebar frame 42 can be turned inward and be folded onto the lower handlebar frame 41. While the upper handlebar frame 42 is folded and the handlebar folding clutch joint 43 is turned, it will drive the cord 44 to have a pulling action, and the pushing and releasing block 45 inside the lower handlebar frame 41 will be pulled and move forward, pushing the upper sliding block 21 inside the linked folding joint 2 to move also forward. Through the tilted supporting facets 211, 221 pushing against each other, when the upper sliding block 21 slides, the lower sliding block 22 will be pushed to slide downward. Likewise, through the side tilted supporting facet 222 and the tilted supporting facet 271 that push against each other, when the lower sliding block 22 slides downward, the releasing push block 27 inside the seatback clutch joint A will be pushed to move to the right and to push the bonding tooth 72, so that the bonding tooth 72 will be released from the groove portion 26. Consequently, under its own weight, the seatback frame 7 will fall naturally backward and downward to the rear leg frame 1.

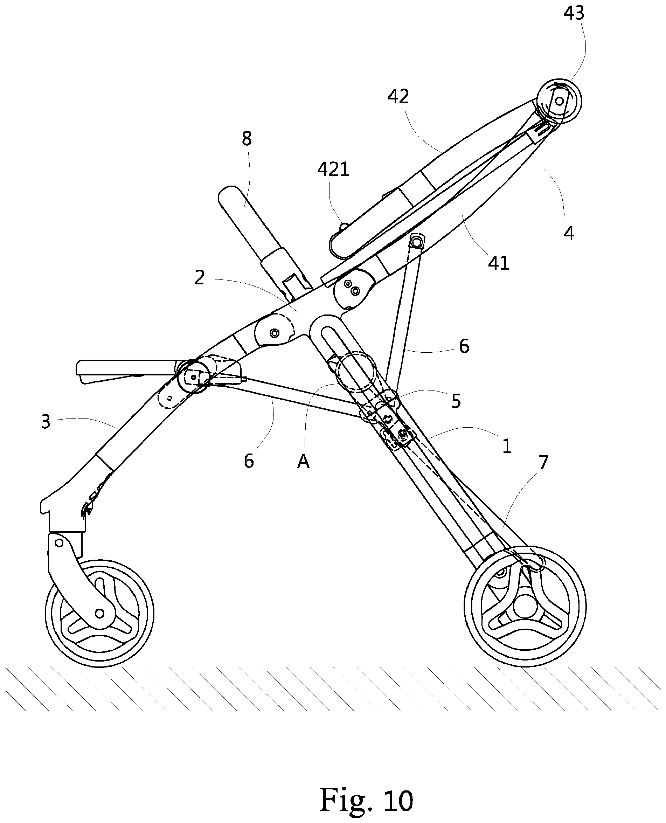

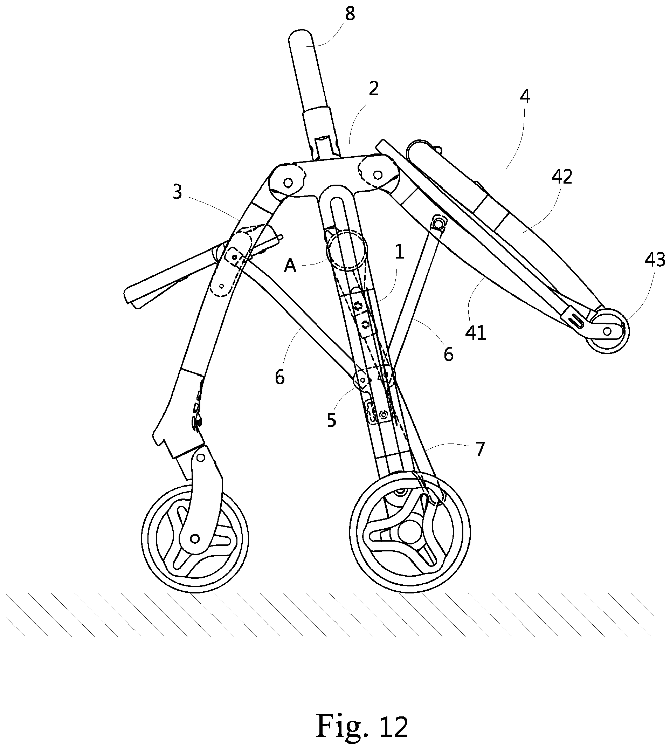

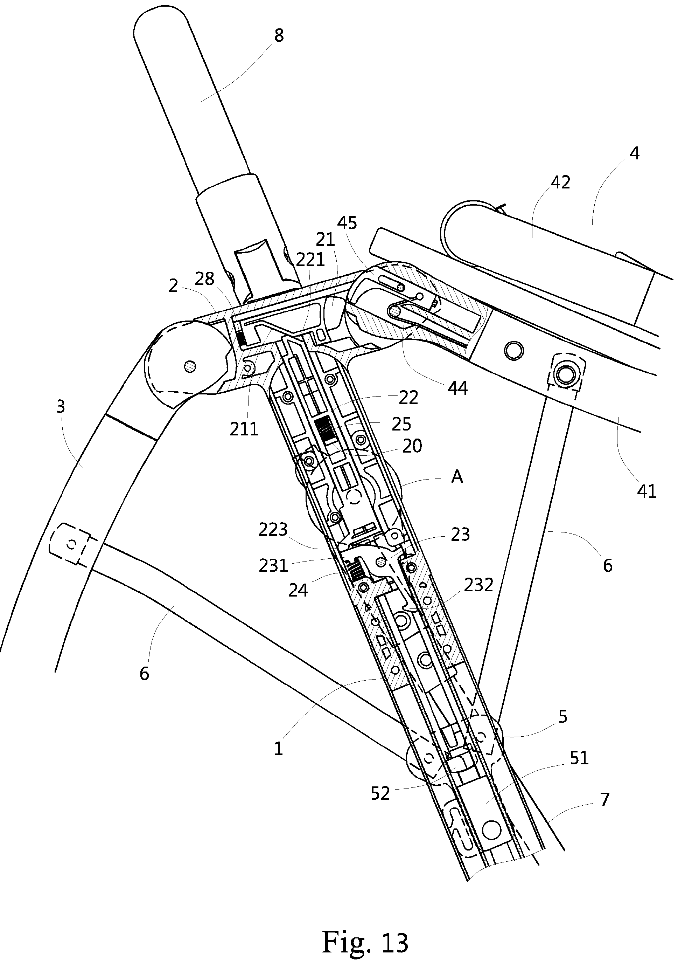

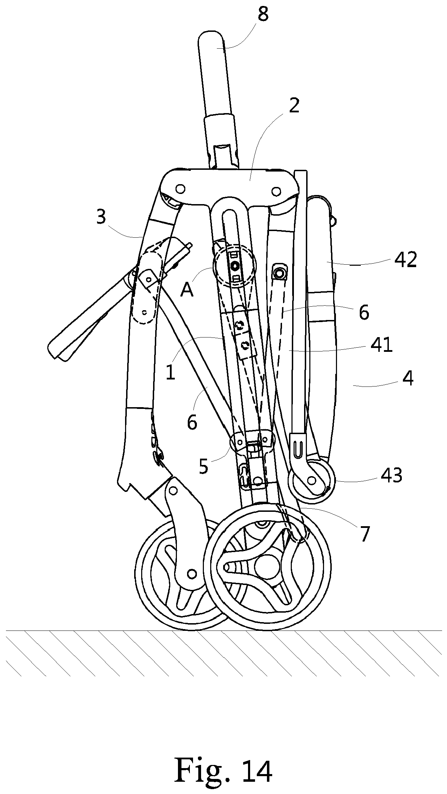

Disclosed in Figs. 10∼11, when the upper handlebar frame 42 is continuously folded toward the lower handlebar frame 41, the pushing and releasing block 45 will continuously push the upper sliding block 21 and drive the lower sliding block 22 to slide downward. The lower pusher portion 223 on its lower end will push the bracing portion 231, so that the hook 23 will turn counter-clockwise, and the hook portion 232 on the other end will be released from the hook receiver portion 52 of the slide base 5, so that the slide base 5 can slide up and down along the rear leg frame 1. Referring to Figs. 12-13, through the connecting rods 6, the slide base 5 sliding downward will pull both the front leg frame 3 and the folded handlebar frame 4 to turn toward and fold onto the rear leg frame 1. In the end, the baby stroller will be folded in a state depicted in Figs. 14∼15. Thus, the baby stroller frame can be completely folded with just one simple operation, and the operator can carry the folded baby stroller by holding the front guardrail 8.

### Reference list

- 1: rear leg frame
- 11: sliding groove
- 2: linked folding joint
- 20: supporting plate
- 21: upper sliding block
- 211: tilted supporting facet
- 22: lower sliding block
- 220: lower slot
- 22: tilted supporting facet
- 222: tilted supporting facet
- 223: lower pusher portion
- 23: hook
- 231: bracing portion
- 232: hook portion
- 24: spring
- 25: spring
- 26: groove portion
- 27: releasing push block
- 271: tilted supporting facet
- 28: spring
- 3: front leg frame
- 4: handlebar frame
- 41: lower handlebar frame
- 42: upper handlebar frame
- 421: folding operator
- 43: handlebar folding clutch joint
- 44: cord
- 45: pushing and releasing block
- 5: slide base
- 51: inlayed sliding portion
- 52: hook receiver portion
- 6: connecting rod
- 7: seatback frame
- 70: spring
- 71: groove portion
- 72: bonding tooth
- 8: front guardrail
- A: seatback clutch joint

## Claims

1. A baby stroller frame linked folding device, characteristically comprising: a linked folding joint (2) provided on the upper end of a rear leg frame (1), pivotally connected to a front leg frame (3) and a handlebar frame (4); the handlebar frame (4) comprises a lower handlebar frame (41) and an upper handlebar frame (42); the lower handlebar frame (41) is pivotally connected to the linked folding joint (2), and on its connecting position, a pushing and releasing block (45) is provided; the upper handlebar frame (42) has a folding operator (421), and is pivotally connected to the lower handlebar frame (41) through a handlebar folding clutch joint (43); on the handlebar folding clutch joint (43), a cord (44) is configured, which will pull the pushing and releasing block (45) inside the lower handlebar frame (41) when the upper handlebar frame (42) is folded; a seatback frame (7) is provided, whose tilting angle can be adjusted; between the seatback frame (7) and the linked folding joint (2), a seatback clutch joint is configured; particularly:
the upper end of the rear leg frame (1) is configured with a slide base (5) which can slide along the rear leg frame (1); the slide base (5) is configured with a hook receiver portion (52), and both sides of the upper end of the slide base (5) are respectively connected with a connecting rod (6), each pivotally connected to the front leg frame (3) and the lower handlebar frame (41);
inside the linked folding joint (2), an upper sliding block (21) is configured, which can slide back and forth, with its rear end pushing against the pushing and releasing block (45), and inside the linked folding joint (2) and below the upper sliding block (21), a lower sliding block (22) is configured, which is elastically pushed against the upper sliding block (21) and can slide up and down; at the position where the upper sliding block (21) and the lower sliding block (22) pushes each other, corresponding tilted supporting facets are configured; on the inner side of the lower sliding block (22), a side tilted supporting facet is further configured; inside the linked folding joint (2) and below the lower sliding block (22), a hook (23) is pivotally configured, which can turn elastically; the upper and lower ends of the hook (23) are respectively configured with a bracing portion (231) to receive the pushing by the lower end of the lower sliding block (22), and a hook portion (232), which can catch the hook receiver portion (52) of the slide base (5);
the seatback clutch joint (A) comprises a first groove portion (26) configured on the corresponding position of the linked folding joint (2); inside the first groove portion (26), a releasing push block (27) is configured, capable of sliding left and right, and having a tilted supporting facet (271) to push against a side tilted supporting facet (222) of the lower sliding block (22); on the corresponding position of the seatback frame (7), a corresponding second groove portion (71) is configured; inside the second groove portion (71), a bonding tooth (72) is configured, which can elastically push the releasing push block (27), so that the bonding tooth (72) can be caught inside the first and second groove portions (26, 71) of the linked folding joint (2) and the seatback frame (7), respectively, at the same time.
